(19) **Europäisches Patentamt / European Patent Office / Office européen des brevets**

(11) **EP 4 520 507 A1**

(12) # EUROPEAN PATENT APPLICATION
published in accordance with Art. 153(4) EPC

(43) Date of publication:
**12.03.2025 Bulletin 2025/11**

(21) Application number: **23819533.3**

(22) Date of filing: **26.04.2023**

(51) International Patent Classification (IPC):
**B29C 64/393** (2017.01)  **B29C 64/118** (2017.01)
**B29C 64/321** (2017.01)  **B33Y 10/00** (2015.01)
**B33Y 30/00** (2015.01)  **B33Y 50/02** (2015.01)

(52) Cooperative Patent Classification (CPC):
**B29C 64/118; B29C 64/321; B29C 64/393;
B33Y 10/00; B33Y 30/00; B33Y 50/02**

(86) International application number:
**PCT/JP2023/016546**

(87) International publication number:
**WO 2023/238546 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.06.2022 JP 2022094603**

(71) Applicant: **KABUSHIKI KAISHA KOBE SEIKO
SHO (KOBE STEEL, LTD.)**
**Hyogo 651-8585 (JP)**

(72) Inventors:
• **TAKENAKA Makoto**
  **Kobe-shi, Hyogo 651-2271 (JP)**
• **ANDO Taka**
  **Kobe-shi, Hyogo 651-2271 (JP)**

(74) Representative: **TBK
Bavariaring 4-6
80336 München (DE)**

(54) **ADDITIVE MANUFACTURING METHOD, ADDITIVE MANUFACTURING EQUIPMENT, AND PROGRAM**

(57)    An additive manufacturing method for producing a manufactured object by a fused deposition molding method using a fiber-reinforced resin filament obtained by impregnating a twisted continuous reinforcing fiber bundle with a resin includes: a manufacturing step of feeding the fiber-reinforced resin filament to a head unit, thermally melting the fed fiber-reinforced resin filament in the head unit, and extruding the melted manufacturing material from a nozzle of the head unit while relatively moving the head unit and a manufacturing table. A speed ratio Vh/Vf of a head speed Vh of the head unit and the manufacturing table in the manufacturing step to a feeding speed Vf of the fiber-reinforced resin filament to be fed to the head unit is set to be larger than 1.

*FIG. 1*

**EP 4 520 507 A1**

**Description**

TECHNICAL FIELD

The present invention relates to an additive manufacturing method, an additive manufacturing device, and a program.

BACKGROUND ART

There has been known a fused deposition molding (FDM) method in which a filament, which is a material for manufacturing, is fed to a head unit, heated and melted in the head unit, extruded from a nozzle, and manufactured while being deposited on a manufacturing table. An FDM-type additive manufacturing method using a fiber-reinforced resin filament obtained by impregnating a twisted continuous reinforcing fiber bundle with a resin has been proposed (Patent Literature 1). According to the method, strength of a manufactured object can be improved.

CITATION LIST

PATENT LITERATURE

Patent Literature 1: WO2015/182675

SUMMARY OF INVENTION

TECHNICAL PROBLEM

However, in a case of using a continuous fiber-reinforced resin filament to manufacture (print) a manufactured object, when a heated and melted manufacturing material is extruded from a nozzle of a head unit, due to a continuous reinforcing fiber in the filament, meandering of the extruded manufacturing material may occur, and printing may not be performed linearly. Therefore, when the manufacturing material is extruded, manufacturing along an intended path cannot be performed, and as a result, a void is generated in the manufactured object formed by depositing the manufacturing material, which may cause a decrease in strength.

Therefore, an object of the present invention is to provide an additive manufacturing method, an additive manufacturing device, and a program capable of performing intended manufacturing without causing meandering even when a filament including a twisted continuous reinforcing fiber bundle is used.

SOLUTION TO PROBLEM

The present invention includes the following configurations.

(1) An additive manufacturing method for producing a manufactured object by a fused deposition molding method using a fiber-reinforced resin filament obtained by impregnating a continuous reinforcing fiber bundle with a resin and applying a twist thereto, the additive manufacturing method including:

a manufacturing step of feeding the fiber-reinforced resin filament to a head unit and extruding a manufacturing material, which is obtained by thermally melting the fed fiber-reinforced resin filament, from a nozzle of the head unit while relatively moving the head unit and a manufacturing table, in which a speed ratio Vh/Vf of a head speed Vh, which is a relative speed between the head unit and the manufacturing table in the manufacturing step, to a feeding speed Vf of the fiber-reinforced resin filament to be fed to the head unit is set to be larger than 1.

(2) An additive manufacturing device for producing a manufactured object by a fused deposition molding method using a fiber-reinforced resin filament obtained by impregnating a continuous reinforcing fiber bundle with a resin and applying a twist thereto, the additive manufacturing device including:

a filament feeding unit configured to feed the fiber-reinforced resin filament;
a head unit configured to thermally melt the fed fiber-reinforced resin filament and extrude the melted manufacturing material from a nozzle;
a manufacturing table disposed to face the head unit and having a manufacturing surface; and

a control unit configured to cause the head unit to extrude the manufacturing material while relatively moving the head unit and the manufacturing table, in which

the control unit sets a head speed Vh, which is a relative speed between the head unit and the manufacturing table, to be larger than a feeding speed Vf of the fiber-reinforced resin filament to be fed to the head unit.

(3) A program for implementing an additive manufacturing function of producing a manufactured object by a fused deposition molding method using a fiber-reinforced resin filament obtained by impregnating a continuous reinforcing fiber bundle with a resin and applying a twist thereto, the program causing a computer to implement:

a function of a manufacturing step of feeding the fiber-reinforced resin filament to a head unit and extruding a manufacturing material, which is obtained by thermally melting the fed fiber-reinforced resin filament, from a nozzle of the head unit while relatively moving the head unit and a manufacturing table; and

a function of setting a head speed Vh, which is a relative speed between the head unit and the manufacturing table in the manufacturing step, to be larger than a feeding speed Vf of the fiber-reinforced resin filament to be fed to the head unit.

ADVANTAGEOUS EFFECTS OF INVENTION

According to the present invention, even when a filament including a twisted continuous reinforcing fiber bundle is used, manufacturing as intended can be performed without causing meandering.

BRIEF DESCRIPTION OF DRAWINGS

[FIG. 1] FIG. 1 is a schematic configuration diagram showing an FDM-type additive manufacturing device.
[FIG. 2] FIG. 2 is a schematic perspective view showing a fiber-reinforced resin filament.
[FIG. 3] FIG. 3 is a diagram schematically showing a fiber bundle with a twist applied in a filament thereof.
[FIG. 4] FIG. 4 is an exploded view showing a side surface of the filament shown in FIG. 3.

DESCRIPTION OF EMBODIMENTS

Hereinafter, embodiments according to the present invention will be described in detail with reference to the drawings.

An additive manufacturing device shown here is a device for creating a manufactured object by a fused deposition molding method, and a fiber-reinforced resin filament obtained by impregnating a twisted continuous reinforcing fiber bundle with a resin is used as a manufacturing material.

<Configuration of Additive Manufacturing device>

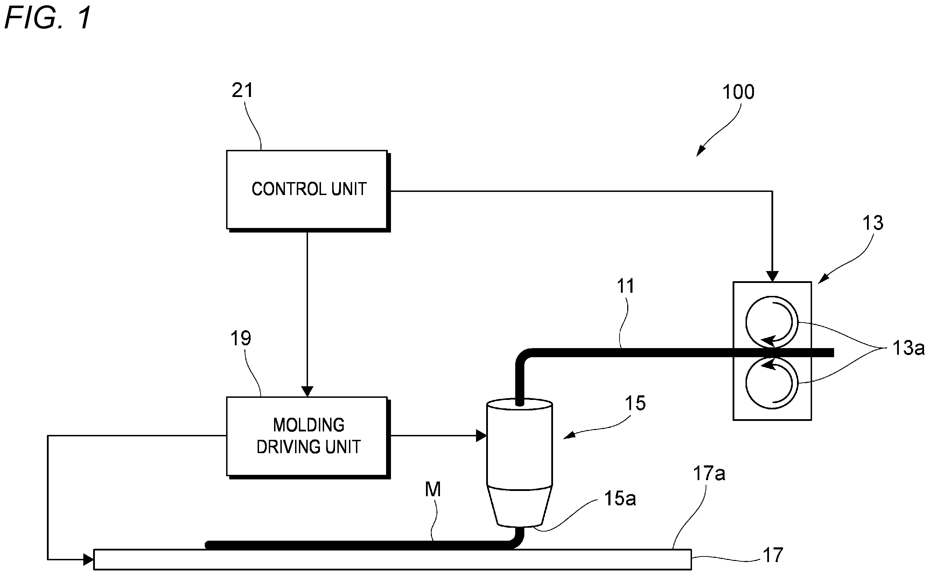

FIG. 1 is a schematic configuration diagram showing an FDM-type additive manufacturing device 100.

The additive manufacturing device 100 includes a filament feeding unit 13 that feeds a fiber-reinforced resin filament (hereinafter, also referred to as a filament) 11, a head unit 15, a manufacturing table 17, a molding driving unit 19, and a control unit 21.

The filament feeding unit 13 includes a pair of driving rollers 13a that sandwich the filament 11, and a driving unit (not shown) such as a motor that rotationally drives at least one of the driving rollers 13a.

The head unit 15 includes a heating unit (not shown) that thermally melts the fed filament 11, and a nozzle 15a that extrudes a manufacturing material melted by the heating unit. Although not shown, a cutting unit such as a cutter or a laser cutting device that cuts a reinforcing fiber included in the filament 11 may be provided.

The manufacturing table 17 is disposed to face the nozzle 15a of the head unit 15, and has a manufacturing surface 17a on which a manufactured object is deposited.

The molding driving unit 19 relatively moves the head unit 15 and the manufacturing table 17 to form a manufacturing material extruded from the nozzle 15a of the head unit 15 along a desired path. For example, the molding driving unit 19 may include a biaxial driving mechanism that moves the head unit 15 within a plane of the manufacturing surface 17a of the manufacturing table 17, and a raising and lowering mechanism that adjusts a depositing height by raising and lowering the manufacturing table 17.

The control unit 21 has a function of controlling feeding of the filament by the filament feeding unit 13 and relative movement of the head unit 15 by the molding driving unit 19, and a function of collectively controlling other units. The control unit 21 receives a program for controlling units including the filament feeding unit 13 and the molding driving unit 19, and executes the program to additively manufacture a manufactured object having a desired shape. The control unit 21 can be implemented by a computer including a processor such as a CPU, a memory such as a ROM and a RAM, a storage such as a hard disk drive HDD and a solid state drive SSD, and the like.

<Fiber-reinforced Resin Strand>

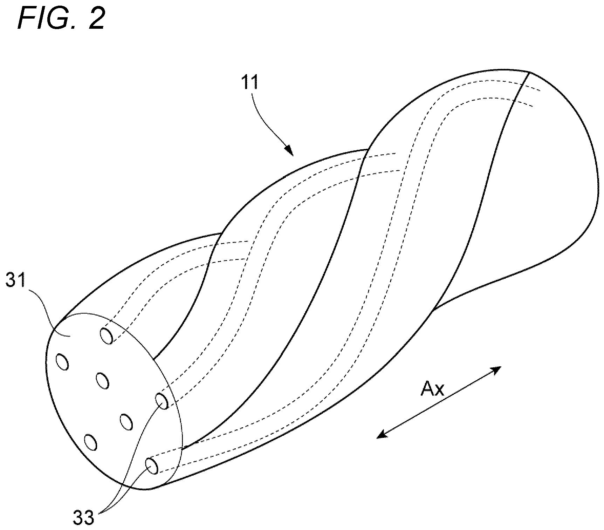

FIG. 2 is a schematic perspective view showing the fiber-reinforced resin filament 11.

The filament 11 is used as a manufacturing raw material for producing a manufactured object, and is a continuous linear resin material containing reinforcing fibers. The filament 11 includes a base material 31 containing a thermoplastic resin, and one or more fiber bundles 33 disposed in the base material 31 and extending continuously in an axial direction Ax. The fiber bundle 33 is formed by twisting and bundling a large number of reinforcing fibers together, and is disposed in a spiral shape by being twisted along a central axis of the filament 11.

As the reinforcing fiber of the fiber bundle 33 constituting the filament 11, organic fibers such as a polyethylene fiber, an aramid fiber, and a Xyron fiber, and inorganic fibers such as a boron fiber, a glass fiber, a carbon fiber, a metal fiber, and a rock fiber may be used. As the reinforcing fiber, a fiber that is subjected to a surface treatment may be used in order to improve adhesion strength between the resin and the fiber.

As the thermoplastic resin contained in the base material 31, polyolefin-based resins such as polypropylene or polyethylene, acrylonitrile-butadiene-styrene resins, polystyrene resins, polyester-based resins such as polyethylene terephthalate, polybutylene terephthalate, or polylactic acid, polyamide-based resins, aromatic polyamide-based resins, polyetherimide, polyarylimide, polyarylate, polyether ether ketone, polyaryletherketone, polybenzimidazole, polyethersulfone, polysulfone, polyvinylidene fluoride resins, liquid crystal polymers, polycarbonate resins, polyacetal, polyphenylene sulfide and the like may be used.

These thermoplastic resins may be used alone, and a thermoplastic resin obtained by blending a plurality of resins may be used in order to improve softening resistance, heat distortion temperature, heat aging resistance, tensile properties, bending properties, creep properties, compression properties, fatigue properties, impact properties, and sliding properties of the thermoplastic resin. Examples of the thermoplastic resin include polyetheretherketone resin (PEEK)/polytetrafluoroethylene (PTFE) and PEEK/polybenzimidazole (PBI). The thermoplastic resin may be obtained by adding short fibers such as a carbon fiber and a glass fiber, talc, or the like to a resin.

By adding a phenolic antioxidant, a thioether-based antioxidant, or a phosphite-based antioxidant, a benzotriazole-based ultraviolet absorber or a triazine-based ultraviolet absorber, a hydrazide-based metal deactivator or an amide-based metal deactivator, or the like to the thermoplastic resin, durability of the manufactured object may be improved.

By adding a phthalic acid-based plasticizer or a polyester-based plasticizer to the thermoplastic resin, the flexibility may be improved, and the manufacturing accuracy during manufacturing and the flexibility of the manufactured object can be improved.

By adding a halogen-based flame retardant, a phosphate ester-based flame retardant, an inorganic flame retardant, or an intumescent flame retardant to the thermoplastic resin, the flame retardancy of the manufactured object can be improved.

By adding a phosphate ester metal salt-based core material or a sorbitol-based core material to the thermoplastic resin, the thermal expansion during the manufacturing can be controlled, and the manufacturing accuracy can be improved.

By adding a non-ionic-based permanent antistatic agent, an anionic-based permanent antistatic agent, and a cationic-based permanent antistatic agent to the thermoplastic resin, the antistatic property of the manufactured object can be improved.

By adding a hydrocarbon-based lubricant or a metal soap-based lubricant to the thermoplastic resin to improve the slidability of the continuous fiber-reinforced strand, the strand may be smoothly supplied during the manufacturing.

<Head Relative Speed and Filament Feeding Speed>

In the additive manufacturing device 100 having the present configuration, the control unit 21 feeds the filament 11 to the head unit 15, and the fed filament 11 is thermally melted by the head unit 15. Then, a manufacturing step of extruding the melted manufacturing material from the nozzles 15a of the head unit 15 while relatively moving the head unit 15 and the manufacturing table 17 is performed. At this time, the control unit 21 sets a head speed Vh, which is a relative speed between the head unit 15 and the manufacturing table 17 in a plane of the manufacturing surface 17a of the manufacturing table 17, to be larger than a feeding speed Vf of the filament 11 to be fed to the head unit 15, and sets a speed ratio Vh/Vf of the head speed Vh to the feeding speed Vf to be larger than 1.

The head speed Vh here is a moving speed of the head unit 15 at which the head unit 15 moves within the plane of the manufacturing surface 17a while the manufacturing surface 17a is fixed, but when the head unit 15 and the manufacturing table 17 are moved in cooperation with each other, the head speed Vh is a relative speed between the manufacturing table 17 and the head unit 15. For example, in the case of a manufacturing method in which the head unit 15 is fixed and the manufacturing table 17 moves, the head speed Vh is a relative speed of the manufacturing table 17 with respect to the head unit 15.

By setting the speed ratio Vh/Vf to be larger than 1, excessive supply of the fiber bundles 33 contained in the filament 11 can be prevented, and meandering of a manufacturing material M obtained by heating and melting the filament 11 and extruded from the nozzle 15a of the head unit 15 is less likely to occur. As a result, since the manufacturing can be performed according to the set path, an unintended void can be prevented from being generated in the manufactured object and a decrease in strength of the manufactured object can be prevented.

In the additive manufacturing method of the manufactured object, by setting the speed ratio Vh/Vf to be larger than 1 and satisfying a further condition to be described later, the manufacturing can be performed without breaking or damaging (fluffing) the reinforcing fiber in the extruded manufacturing material M. Accordingly, fiber breakage and damage (fluffing) in the manufactured object can be prevented, and a decrease in strength of the manufactured object can be more reliably prevented.

Hereinafter, the condition for the above-described speed ratio Vh/Vf will be described in more detail.

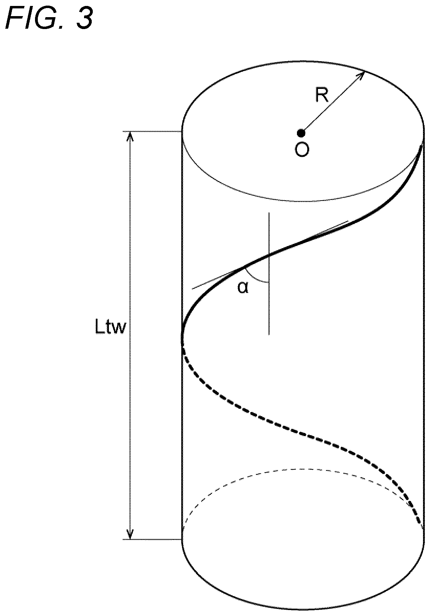

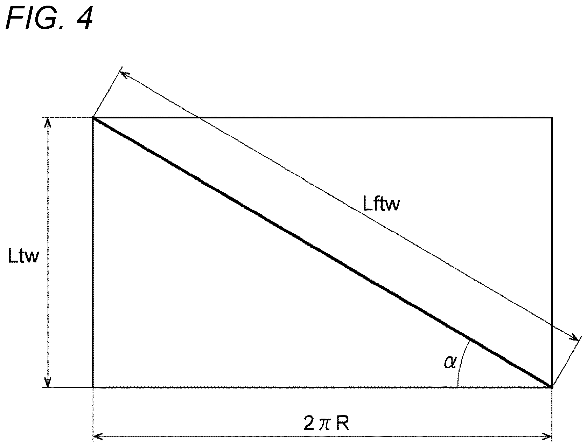

FIG. 3 is a diagram schematically showing a fiber bundle with a twist applied in a filament thereof. FIG. 4 is an exploded view showing a side surface of the filament shown in FIG. 3.

When the fiber bundle is disposed parallel to a central axis of a filament, the length of the filament and the length of the fiber bundle are equal. When the fiber bundle is disposed in a spiral shape along the central axis of the filament, in a length Ltw of the filament per twist pitch of the fiber bundle, a length Lftw of the fiber bundle wound in a spiral shape at a position of radius R from a filament center O is longer than the filament length Ltw. That is, the length Lftw of the fiber bundle in the length Ltw of the filament per twist pitch can be expressed by a formula (1) from the filament radius R according to a twisting angle $\alpha$.

[Math. 1]

$$L_{ftw} = \sqrt{L_{tw}{}^2 + (2\pi R)^2} \quad \cdots \quad \text{formula (1)}$$

A tensile force may act on the fiber bundle due to solidification of the manufacturing material M after being extruded from the nozzle 15a during manufacturing. In this case, the length of the fiber bundle in the filament during manufacturing is a length obtained by adding a value $\varepsilon$Lftw obtained by multiplying the length Lftw of an original fiber bundle by a strain $\varepsilon$ of a reinforcing fiber at break (a deformation length $\Delta$Lftw due to tension of the fiber bundle in the filament per twist pitch) to the length Lftw of the original fiber bundle. That is, the length of the fiber bundle during manufacturing is a length obtained by multiplying a parameter N shown in a formula (2) with the length Ltw of the filament as a reference.

[Math. 2]

$$N = \frac{\Delta L_{ftw} + L_{ftw}}{L_{tw}} \quad \cdots \quad \text{formula (2)}$$

Here, the deformation length $\Delta$Lftw is obtained from a table or a relational expression that is experimentally or analytically obtained in advance from a relationship between the head speed Vh and the feeding speed Vf of the filament. A limit value of the deformation length $\Delta$Lftw due to tension may be obtained by measuring an elongation until breakage of only a fiber in advance by a tensile test or the like, and using a deformation amount until the breakage.

When the length of the filament is equal to the length of the fiber bundle in the filament, it is desirable to make the head speed Vh and the feeding speed Vf of the filament during manufacturing equal such that a supply amount and an extruding amount of the manufacturing material are balanced. In the case where the length of the fiber bundle in the filament is longer than the length of the filament as described above, when the head speed Vh and the feeding speed Vf of the filament are made equal to each other, the fiber bundle in the manufacturing material extruded from the nozzle of the head unit 15 after being heated and melted becomes excess, and the excess fiber bundle causes meandering of the path.

Therefore, by setting the speed ratio Vh/Vf of the head speed Vh to the feeding speed Vf of the filament to be larger than 1, a supply amount of the fiber bundle in the manufacturing material M extruded from the nozzle 15a after being heated and melted with respect to the head speed Vh becomes appropriate, and meandering of the manufacturing path can be prevented.

By setting an experimentally obtained parameter K shown in a formula (3) in a range of 0.985 or more and 1.030 or less, meandering of the extruded manufacturing material after being heated and melted does not occur, and the manufacturing can be performed without breaking the fiber bundle in the extruded manufacturing material. As a result, fiber breakage in the manufactured object can be prevented, and strength of the manufactured object can be improved.
[Math. 3]

$$K = \frac{\dfrac{Vh}{Vf}}{\dfrac{\Delta L_{ftw} + L_{ftw}}{L_{tw}}} \quad \cdots \quad \text{formula (3)}$$

The range of the parameter K is preferably 0.990 or more, and more preferably 1.000 or more, and preferably 1.028 or less, and more preferably 1.020 or less. An optimum value of the parameter K is 1.

The speed ratio Vh/Vf is preferably equal to or less than the parameter N in the formula (2). That is, by satisfying a formula (4), a difference between the length of the filament and the length of the fiber bundle is set in accordance with the speed ratio Vh/Vf, whereby the supply amount of the fiber bundle can be further optimized.
[Math. 4]

$$\frac{Vh}{Vf} \leqq \frac{\Delta L_{ftw} + L_{ftw}}{L_{tw}} \quad \cdots \quad \text{formula (4)}$$

Further, when the speed ratio Vh/Vf is set to be larger than 1 and the parameter K is set to be in the above-described range, the meandering of the manufacturing material extruded from the nozzle 15a of the head unit 15 after being heated and melted does not occur, and the manufacturing can be performed without causing damage (fluffing and breakage) to the fiber bundle in the extruded manufacturing material. As a result, fiber damage (fluffing) in the manufactured object can be prevented, and the strength of the manufactured object can be synergistic improved.

[Examples]

Results of manufacturing using a filament having the following properties by the additive manufacturing device 100 shown in FIG. 1 are summarized in Table 1.

(Test Conditions)

• Filament

Reinforcing fiber of fiber bundle: 1K carbon fiber
Base material: polyamide resin
Filament diameter: 0.288 mm
Twisting angle: 2°
Length Ltw of filament per twist pitch: 25.939 mm
Length Lftw of fiber bundle per twist pitch: 25.954 mm
Strain $\varepsilon$ of reinforcing fiber at break: 0.015
Deformation length ΔLftw due to tension of fiber bundle in filament per twist pitch: 0.389 mm

[Table 1]

| Test No. | (ΔLftw+Lftw)/Ltw | Head speed Vh | Feeding speed Vf | Speed ratio Vh/Vf | (Vh/Vf/{(ΔLftw+Lftw)/Lt w} | Printability during linear printing | Printability evaluation |
|---|---|---|---|---|---|---|---|
| | | mm/s | mm/s | | | | |
| Test Example 1 | 1.016 | 5.00 | 4.98 | 1.005 | 0.989 | No meandering | A |
| Test Example 2 | 1.016 | 5.00 | 4.95 | 1.010 | 0.994 | No meandering | A |
| Test Example 3 | 1.016 | 5.00 | 4.85 | 1.031 | 1.015 | No meandering | B |
| Test Example 4 | 1.016 | 5.00 | 4.80 | 1.042 | 1.026 | No meandering Fluffing of fiber occurs slightly | B |
| Test Example 5 | 1.016 | 5.00 | 4.75 | 1.053 | 1.036 | Fiber breakage occurs | C |
| Test Example 6 | 1.016 | 5.00 | 5.00 | 1.000 | 0.984 | Meandering occurs | C |

In Test Examples 1 to 6, the head speed Vh when a manufacturing table was fixed and a head unit was moved was kept constant, and the feeding speed Vf of a filamnet was changed. Presence or absence of meandering, fluffing of fibers, and presence or absence of fiber breakage when a manufacturing material was manufactured in a linear shape under each condition were confirmed. Printability was evaluated on a scale of A: excellent, B: no practical problems, and C: at least one of meandering, fluffing, and fiber breakage occurred after being extruded.

In Test Example 1, the head speed Vh was 5.0 mm/s, and the feeding speed Vf was 4.98 m/s. In this case, the speed ratio Vh/Vf is 1.005, which is larger than 1. The speed ratio Vh/Vf is equal to or less than the parameter N in the formula (2). The parameter K is 0.989, which is in a range of 0.985 or more and 1.030 or less as described above.

Under conditions in Test Example 1, when linear printing was performed to manufacture the manufacturing material lineally, there was no meandering of the manufacturing path and the printability was good.

In Test Example 2, the feeding speed Vf was decreased to 4.95 mm/s, and the speed ratio Vh/Vf was set to 1.010. The speed ratio Vh/Vf was equal to or less than the parameter N. The parameter K was 0.994.

Under conditions in Test Example 2, as in Test Example 1, meandering did not occur during the linear printing, and good printability was obtained.

In Test Example 3, the feeding speed Vf was decreased to 4.85 mm/s, and the speed ratio Vh/Vf was set to 1.031. The speed ratio Vh/Vf was larger than the parameter N. The parameter K was 1.015.

Under conditions in Test Example 3, meandering did not occur during the linear printing, but the printability was lower than those in Test Examples 1 and 2.

In Test Example 4, the feeding speed Vf was decreased to 4.80 mm/s, and the speed ratio Vh/Vf was set to 1.042. The speed ratio Vh/Vh was larger than the parameter N. The parameter K was 1.026.

Under conditions in Test Example 4, meandering did not occur during the linear printing, but fluffing of the fiber occurred slightly. The printability was equivalent to that in Test Example 3, and there was no practical problem.

In Test Example 5, the feeding speed Vf was decreased to 4.75 mm/s, and the speed ratio Vh/Vf was set to 1.053. The speed ratio Vh/Vh was larger than the parameter N. The parameter K was 1.036, which was out of the range of 0.985 or more and 1.030 or less as described above.

Under conditions in Test Example 5, fiber breakage occurred and the printability deteriorated.

In Test Example 6, the feeding speed Vf was set to 5.0 mm/s, which was the same as the head speed Vh, and the speed ratio Vh/Vf was set to 1.000. The speed ratio Vh/Vh was equal to or less than the parameter N. The parameter K was 0.984, which was out of the range of 0.985 or more and 1.030 or less as described above.

Under conditions in Test Example 6, meandering occurred during the linear printing, and the printability deteriorated.

From the above results, when the speed ratio Vh/Vf was 1 or more, the meandering during the linear printing was prevented, and when the speed ratio Vh/Vf was the parameter N or less, improvement in printability was observed. Further, by setting the parameter K in the range of 0.985 or more and 1.030 or less, the effect of preventing fluffing and fiber breakage was obtained.

As described above, the present invention is not limited to the above-described embodiments, and combinations of the respective configurations of the embodiments and changes and applications made by those skilled in the art based on the description of the specification and well-known techniques are also intended for the present invention and are included in the scope of protection.

As described above, the present specification discloses the following matters.

(1) An additive manufacturing method for producing a manufactured object by a fused deposition molding method using a fiber-reinforced resin filament obtained by impregnating a twisted continuous reinforcing fiber bundle with a resin, the additive manufacturing method including:

a manufacturing step of feeding the fiber-reinforced resin filament to a head unit and extruding a manufacturing material, which is obtained by thermally melting the fed fiber-reinforced resin filament, from a nozzle of the head unit while relatively moving the head unit and a manufacturing table, in which

a speed ratio Vh/Vf of a head speed Vh, which is a relative speed between the head unit and the manufacturing table in the manufacturing step, to a feeding speed Vf of the fiber-reinforced resin filament to be fed to the head unit is set to be larger than 1.

According to the additive manufacturing method, meandering of the manufacturing material obtained by heating and melting the filament and extruded from the nozzle of the head unit does not occur, and manufacturing can be performed according to the set path. As a result, the formation of a void in the manufactured object can be prevented and the strength of the manufactured object can be improved.

(2) The additive manufacturing method according to (1), in which the speed ratio Vh/Vf satisfies a relationship:

[Math. 5]

$$0.985 \leqq \frac{\frac{Vh}{Vf}}{\frac{\Delta L_{ftw} + L_{ftw}}{L_{tw}}} \leqq 1.030$$

Ltw: a length of the fiber-reinforced resin filament per twist pitch
Lftw: a length of the fiber bundle in the fiber-reinforced resin filament per twist pitch
ΔLftw: a deformation length due to tension of the fiber bundle in the fiber-reinforced resin filament per twist pitch.

According to the additive manufacturing method, meandering of the manufacturing material extruded after being heated and melted does not occur, and manufacturing can be performed without breaking the fiber bundle in the extruded manufacturing material. As a result, fiber breakage in the manufactured object can be prevented, and strength of the manufactured object can be improved.

(3) The additive manufacturing method according to (1) or (2), in which the speed ratio Vh/Vf satisfies a relationship:

[Math. 6]

$$\frac{Vh}{Vf} \leq \frac{\Delta L_{ftw} + L_{ftw}}{L_{tw}}$$

Ltw: a length of the fiber-reinforced resin filament per twist pitch
Lftw: a length of the fiber bundle in the fiber-reinforced resin filament per twist pitch
ΔLftw: a deformation length due to tension of the fiber bundle in the fiber-reinforced resin filament per twist pitch.

According to the additive manufacturing method, the supply amount of the fiber bundle can be further optimized.

(4) An additive manufacturing device producing a manufactured object by a fused deposition molding method using a fiber-reinforced resin filament obtained by impregnating a twisted continuous reinforcing fiber bundle with a resin, the additive manufacturing device including:

a filament feeding unit configured to feed the fiber-reinforced resin filament;

a head unit configured to thermally melt the fed fiber-reinforced resin filament and extrude the melted manufacturing material from a nozzle;

a manufacturing table disposed to face the head unit and having a manufacturing surface; and

a control unit configured to cause the head unit to extrude the manufacturing material while relatively moving the head unit and the manufacturing table, in which

the control unit sets a head speed Vh, which is a relative speed between the head unit and the manufacturing table, to be larger than a feeding speed Vf of the fiber-reinforced resin filament to be fed to the head unit.

According to the additive manufacturing device, by adjusting the head speed and the feeding speed of the filament by the control unit, meandering of the manufacturing material obtained by heating and melting the filament and extruded from the nozzle of the head unit does not occur, and the manufacturing can be performed according to the set path. As a result, the formation of a void in the manufactured object can be prevented and the strength of the manufactured object can be improved.

(5) A program for implementing an additive manufacturing function of producing a manufactured object by a fused deposition molding method using a fiber-reinforced resin filament obtained by impregnating a twisted continuous reinforcing fiber bundle with a resin, the program causing a computer to implement:

a function of a manufacturing step of feeding the fiber-reinforced resin filament to a head unit and extruding a manufacturing material, which is obtained by thermally melting the fed fiber-reinforced resin filament, from a nozzle of the head unit while relatively moving the head unit and a manufacturing table; and

a function of setting a head speed Vh, which is a relative speed between the head unit and the manufacturing table in the manufacturing step, to be larger than a feeding speed Vf of the fiber-reinforced resin filament to be fed to the head unit.

According to the program, meandering of the manufacturing material obtained by heating and melting the filament and extruded from the nozzle of the head unit does not occur, and the manufacturing can be performed according to the set path. As a result, the formation of a void in the manufactured object can be prevented and the strength of the manufactured object can be improved.

The present application is based on Japanese Patent Application No. 2022-094603 filed on June 10, 2022, the contents of which are incorporated herein by reference.

REFERENCE SIGNS LIST

11 filament
13 filament feeding unit
15 head unit
15a nozzle
17 manufacturing table
19 molding driving unit
21 control unit
31 base material
33 fiber bundle
100 additive manufacturing device

**Claims**

1.  An additive manufacturing method for producing a manufactured object by a fused deposition molding method using a fiber-reinforced resin filament obtained by impregnating a twisted continuous reinforcing fiber bundle with a resin, the additive manufacturing method comprising:

    a manufacturing step of feeding the fiber-reinforced resin filament to a head unit and extruding a manufacturing material, which is obtained by thermally melting the fed fiber-reinforced resin filament, from a nozzle of the head unit while relatively moving the head unit and a manufacturing table, wherein
    a speed ratio Vh/Vf of a head speed Vh, which is a relative speed between the head unit and the manufacturing table in the manufacturing step, to a feeding speed Vf of the fiber-reinforced resin filament to be fed to the head unit is set to be larger than 1.

2. The additive manufacturing method according to claim 1, wherein the speed ratio Vh/Vf satisfies a relationship:

[Math. 1]

$$0.985 \leqq \frac{\frac{Vh}{Vf}}{\frac{\Delta L_{ftw} + L_{ftw}}{L_{tw}}} \leqq 1.030$$

Ltw: a length of the fiber-reinforced resin filament per twist pitch Lftw: a length of the fiber bundle in the fiber-reinforced resin filament per twist pitch
ΔLftw: a deformation length due to tension of the fiber bundle in the fiber-reinforced resin filament per twist pitch
ε: a strain of a reinforcing fiber at break.

3. The additive manufacturing method according to claim 1 or 2, wherein the speed ratio Vh/Vf satisfies a relationship:

[Math. 2]

$$\frac{Vh}{Vf} \leqq \frac{\Delta L_{ftw} + L_{ftw}}{L_{tw}}$$

Ltw: a length of the fiber-reinforced resin filament per twist pitch Lftw: a length of the fiber bundle in the fiber-reinforced resin filament per twist pitch
ΔLftw: a deformation length due to tension of the fiber bundle in the fiber-reinforced resin filament per twist pitch
ε: a strain of a reinforcing fiber at break.

4. An additive manufacturing device producing a manufactured object by a fused deposition molding method using a fiber-reinforced resin filament obtained by impregnating a twisted continuous reinforcing fiber bundle with a resin, the additive manufacturing device comprising:

a filament feeding unit configured to feed the fiber-reinforced resin filament;
a head unit configured to thermally melt the fed fiber-reinforced resin filament and extrude the melted manufacturing material from a nozzle;
a manufacturing table disposed to face the head unit and having a manufacturing surface; and
a control unit configured to cause the head unit to extrude the manufacturing material while relatively moving the head unit and the manufacturing table, wherein
the control unit sets a head speed Vh, which is a relative speed between the head unit and the manufacturing table, to be larger than a feeding speed Vf of the fiber-reinforced resin filament to be fed to the head unit.

5. A program for implementing an additive manufacturing function of producing a manufactured object by a fused deposition molding method using a fiber-reinforced resin filament obtained by impregnating a twisted continuous reinforcing fiber bundle with a resin, the program causing a computer to implement:

a function of a manufacturing step of feeding the fiber-reinforced resin filament to a head unit and extruding a manufacturing material, which is obtained by thermally melting the fed fiber-reinforced resin filament, from a nozzle of the head unit while relatively moving the head unit and a manufacturing table; and
a function of setting a head speed Vh, which is a relative speed between the head unit and the manufacturing table in the manufacturing step, to be larger than a feeding speed Vf of the fiber-reinforced resin filament to be fed to the head unit.

FIG. 1

FIG. 2

# FIG. 3

## FIG. 4

## INTERNATIONAL SEARCH REPORT

| International application No. |
| --- |
| **PCT/JP2023/016546** |

### A. CLASSIFICATION OF SUBJECT MATTER

**B29C 64/393**(2017.01)i; **B29C 64/118**(2017.01)i; **B29C 64/321**(2017.01)i; **B33Y 10/00**(2015.01)i; **B33Y 30/00**(2015.01)i; **B33Y 50/02**(2015.01)i

FI:   B29C64/393; B29C64/118; B33Y10/00; B33Y30/00; B29C64/321; B33Y50/02

According to International Patent Classification (IPC) or to both national classification and IPC

### B. FIELDS SEARCHED

Minimum documentation searched (classification system followed by classification symbols)

B29C64/393; B29C64/118; B29C64/321; B33Y10/00; B33Y30/00; B33Y50/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2016-101731 A (ROLAND DG CORP.) 02 June 2016 (2016-06-02)<br>claims, paragraphs [0001], [0087]-[0099] | 1, 4-5 |
| Y | JP 2016-107462 A (ROLAND DG CORP.) 20 June 2016 (2016-06-20)<br>claims, paragraphs [0001], [0064]-[0078], [0105] | 1, 4-5 |
| Y | JP 2021-123026 A (KOBE STEEL, LTD.) 30 August 2021 (2021-08-30)<br>claims, paragraphs [0035]-[0037], [0063], fig. 1 | 1, 4-5 |
| Y | WO 2022/097590 A1 (KOBE STEEL, LTD.) 12 May 2022 (2022-05-12)<br>paragraphs [0010], [0011], [0014] | 1, 4-5 |
| A | US 2022/0152905 A1 (TECHNISCHE UNIVERSITAT DRESDEN) 19 May 2022 (2022-05-19)<br>entire text, all drawings | 1-5 |
| A | US 2013/0095302 A1 (PETTIS NATHANIEL B.) 18 April 2013 (2013-04-18)<br>entire text, all drawings | 1-5 |

☐ Further documents are listed in the continuation of Box C.      ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **23 June 2023** | **04 July 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/016546**

| Patent document cited in search report | | | Publication date (day/month/year) | Patent family member(s) | | | Publication date (day/month/year) |
|---|---|---|---|---|---|---|---|
| JP | 2016-101731 | A | 02 June 2016 | (Family: none) | | | |
| JP | 2016-107462 | A | 20 June 2016 | (Family: none) | | | |
| JP | 2021-123026 | A | 30 August 2021 | US | 2021/0237339 | A1 | |
| | | | | claims, paragraphs [0042]-[0044], [0078], fig. 1 | | | |
| | | | | EP | 3862185 | A1 | |
| | | | | CN | 113211678 | A | |
| WO | 2022/097590 | A1 | 12 May 2022 | (Family: none) | | | |
| US | 2022/0152905 | A1 | 19 May 2022 | WO | 2020/174081 | A1 | |
| | | | | EP | 3930982 | A1 | |
| | | | | EP | 3702126 | A1 | |
| US | 2013/0095302 | A1 | 18 April 2013 | US | 2016/0136901 | A1 | |
| | | | | US | 2018/0290385 | A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015182675 A
- JP 2022094603 A